# EUROPÄISCHE PATENTANMELDUNG

(11) **EP 1 248 126 A1**
(43) Veröffentlichungstag der Anmeldung: **09.10.2002**
(21) Anmeldenummer: 01126836.4
(22) Anmeldetag: 10.11.2001
(51) Int. Cl.: G02B 6/38

(54) **Träger für mehrere Kabelhalter**

(71) Anmelder: Agilent Technologies, Inc. (a Delaware corporation), Palo Alto, CA 94303 (US)
(72) Erfinder: Schlueter, Malte, 70771 Leinfelden (DE); Heitkamp, Jens, 71126 Gauefelden (DE)
(74) Vertreter: Barth, Daniel

(57) **Zusammenfassung**

Die vorliegende Erfindung betrifft einen Träger (1) für mehrere Kabelhalter (5), insbesondere von Lichtleitkabeln (6). Der Kabelhalter (1) besitzt ein Gehäuse (2), das auf einer Kabelhalterseite (3) mehrere Aufnahmen (4) enthält, in die jeweils einer der Kabelhalter (5) einsteckbar ist. Ein vom Kabelhalter (5) gehaltertes und in Einsteckrichtung von diesem abstehendes Kabel (6) durchdringt das Gehäuse (2) an einer von der Kabelhalterseite (3) abgewandten Geräteseite (17). Die Einsteckrichtungen mehrerer oder aller Aufnahmen (4) verlaufen parallel zueinander.

## Beschreibung

Die vorliegende Erfindung betrifft einen Träger für mehrere Kabelhalter, insbesondere von Lichtleitkabeln.

Kabelhalter, insbesondere für Lichtleitkabel, kommen beispielsweise dann zum Einsatz, wenn optische Komponenten oder Bauteile, vorzugsweise nach ihrer Herstellung, hinsichtlich einer ordnungsgemäßen Funktion geprüft und/oder ausgemessen werden sollen. Zu diesem Zweck müssen regelmäßig eine Vielzahl von Lichtleitkabeln an ein geeignetes Mess- und/oder Prüfgerät angeschlossen werden. Um die Manipulierbarkeit der Lichtleitkabel zu verbessern, werden diese für den Anschluss an das Mess- und/oder Prüfgerät mit einem Kabelhalter ausgestattet. Zweckmäßig bildet dieser Kabelhalter dabei einen Stecker, der in eine entsprechende Buchse am Mess- und/oder Prüfgerät einsteckbar ist. Hierdurch kann bei den Messungen eine möglichst hohe Güte für die optische Signalübertragung gewährleistet werden. Dabei muss der Anwender sehr sorgfältig mit den Kabelhaltern hantieren, da die vom jeweiligen Kabelhalter abstehenden freien Kabelenden, insbesondere bei Lichtleitkabeln, äußerst berührungsempfindlich sind. Es ist daher ratsam, den Kabelhalter bereits unmittelbar nach dem Anbringen am Kabel in die Buchse des Mess- und/oder Prüfgeräts einzustecken. Da zur Überprüfung komplexerer Bauteile eine relativ große Anzahl an Kabeln mit Hilfe derartiger Kabelhalter an das jeweilige Messund/oder Prüfgerät angeschlossen werden müssen, besteht hier ein Bedarf, die Handhabung der einzelnen Kabelhalter zu vereinfachen.

### ZUSAMMENFASSUNG DER ERFINDUNG

Die vorliegende Erfindung beschäftigt sich mit dem Problem, einen Weg zur Vereinfachung der Manipulierbarkeit von Kabelhaltern aufzuzeigen.

Dieses Problem wird durch die Gegenstände der unabhängigen Ansprüche gelöst. Vorteilhafte Ausgestaltungen sind Gegenstand der abhängigen Ansprüche.

Die vorliegende Erfindung beruht auf dem Gedanken, einen Träger bereitzustellen, in den mehrere Kabelhalter einsteckbar sind. Durch diesen Vorschlag können mehrere Kabelhalter gleichzeitig im Träger gehaltert werden, die dadurch für eine einfachere Handhabung zusammengefasst werden. Denn durch den mehrere Kabelhalter gleichzeitig aufnehmenden Träger kann eine bestimmte Anzahl von Kabelhaltern gleichzeitig manipuliert werden, ohne dass dazu eine besondere Sorgfalt erforderlich ist. Der Träger kann beispielsweise zur sicheren (Zwischen-)Ablage der Kabelhalter dienen, bevor diese in die Buchse des Mess- und/oder Prüfgeräts eingesteckt werden.

Von besonderem Vorteil ist eine Ausführungsform, bei welcher der Träger als Mehrfachstecker ausgebildet ist, derart, dass er in eine komplementäre Mehrfachbuchse einsteckbar ist, die am zugehörigen Mess-/und Prüfgerät ausgebildet ist. Durch diese Maßnahme können somit mehrere, in den Träger eingesteckte Kabelhalter gleichzeitig mit Hilfe des Trägers an das zugehörige Mess- und/oder Prüfgerät angeschlossen werden. Auch hierdurch vereinfacht sich die Handhabung der Kabelhalter.

Des weiteren kann bei einer Weiterbildung eine Schutzkappe vorgesehen sein, die auf das Gehäuse des Trägers aufsteckbar ist und dabei die freien Enden der Kabel der in den Träger eingesteckten Kabelhalter in sich aufnimmt und nach außen schützt. Mit Hilfe dieser Schutzkappe kann der Träger besonders gut als Zwischen-Ablage für die einzelnen Kabelhalter verwendet werden, wobei die Schutzkappe effektiv Berührungen der empfindlichen freien Kabelenden verhindert. Wenn die Schutzkappe abnehmbar ausgestaltet ist, kann der Träger zweckmäßig wieder als Mehrfachstecker ausgestaltet werden.

Entsprechend einer anderen Ausführungsform können mehrere, insbesondere alle, am Träger ausgebildeten Aufnahmen quer zur Einsteckrichtung der Kabelhalter eine größere Breite als Höhe aufweisen, wobei diese Aufnahmen in Höhenrichtung übereinander oder nebeneinander am Trägergehäuse angeordnet sind. Durch diese Bauweise werden die Abmessungen des Trägers relativ kompakt. Insbesondere können die Abstände übereinander bzw. nebeneinander angeordneter Aufnahmen relativ klein gewählt werden, so dass sich eine relativ kompakte Stapelung der Kabelhalter erzielen lässt. Diese Bauart ist dann von Vorteil, wenn am Mess- und/oder Prüfgerät nur relativ wenig Platz zum Anschließen der Kabelhalter vorhanden ist. Durch den kompakt bauenden Träger können mehrere Kabelhalter gleichzeitig manuell recht einfach an das Messund/oder Prüfgerät angeschlossen werden, während bei einem engen Platzangebot das manuelle Anbringen der einzelnen Kabelhalter nicht ohne weiteres möglich ist. Diese Ausführungsform ermöglicht es außerdem am Messund/oder Prüfgerät mehrere Mehrfachbuchsen in Breitenrichtung nebeneinander anzuordnen, um mehrere als Mehrfachstecker ausgebildete Träger nebeneinander an das Mess- und/oder Prüfgerät anzuschließen. Eine derartig dichte Anordnung einzelner Kabelhalter am Mess- und/oder Prüfgerät ist mit einzeln steckbaren Kabelhaltern kaum oder nur noch mit sehr viel Geschick realisierbar.

### KURZE BESCHREIBUNG DER ZEICHNUNGEN

Die Erfindung wird im Folgenden weiter unter Heranziehung der Zeichnungen erläutert, wobei sich gleiche Referenzzeichen auf gleiche oder funktional gleiche oder ähnliche Merkmale beziehen. Es zeigen, jeweils schematisch,
- Fig. 1: eine perspektivische Ansicht auf einen Träger nach der Erfindung beim Anschließen an ein nur teilweise dargestelltes Gerät,
- Fig. 2: eine perspektivische Ansicht auf den erfindungsgemäßen Träger beim Aufstecken einer Schutzkappe,
- Fig. 3: eine perspektivische Ansicht auf den erfindungsgemäßen Träger bei aufgesteckter Schutzkappe, jedoch bei einer anderen Ausführungsform,
- Fig. 4: eine perspektivische Ansicht auf den erfindungsgemäßen Träger mit aufgesteckter Schutzkappe, jedoch in einer anderen Blickrichtung,
- Fig. 5: eine perspektivische Ansicht auf den erfindungsgemäßen Träger beim Aufstecken der Schutzkappe, jedoch bei einer anderen Ausführungsform, und
- Fig. 6: eine Ansicht wie in Fig. 1, jedoch bei einer weiteren Ausführungsform.

### DETAILLIERTE BESCHREIBUNG DER ZEICHNUNGEN

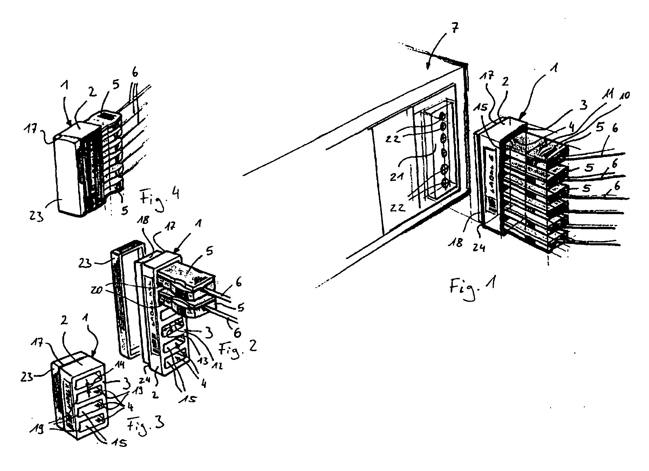

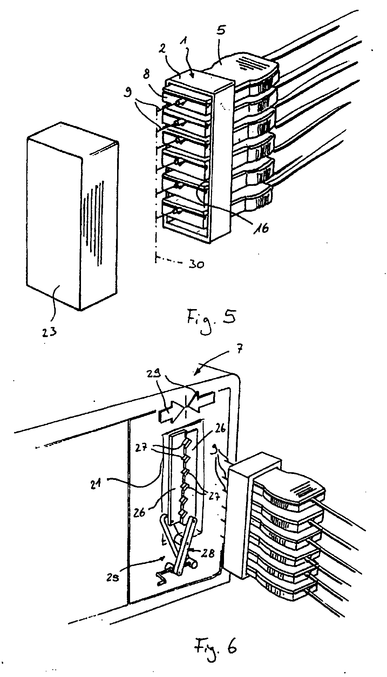

Entsprechend den Fig. 1 bis 4 weist ein erfindungsgemäßer Träger 1 ein Gehäuse 2 auf, das kastenförmig ausgestaltet sein kann. Das Gehäuse 2 besitzt an einer, in den Fig. 1 bis 3 dem Betrachter zugewandten Kabelhalterseite 3 mehrere Aufnahmen 4. In jede dieser Aufnahmen 4 ist ein Kabelhalter 5 einsteckbar, in dem jeweils ein Kabel 6, insbesondere ein Lichtleitkabel bzw. eine Lichtleitfaser, gehaltert ist. Üblicherweise ist in den Kabelhaltem 5 jeweils nur ein Ende bzw. ein Endabschnitt des jeweiligen Kabels 6 gehaltert. In der Ausführungsform der Fig. 3 enthält das Gehäuse vier Steckplätze oder Aufnahmen 4, während die Ausführungsformen der anderen Figuren jeweils sechs Aufnahmen 4 besitzen.

Die Kabel 6 sind üblicherweise mit einem zu prüfenden und/oder auszumessenden Bauteil verbunden und müssen zum Anschluss an ein Messund/oder Prüfgerät 7 an ihren Enden jeweils mit einem solchen Kabelhalter 5 ausgestattet werden, der die Kabelenden in einer vorbestimmten Weise ausrichtet und positioniert. Wie beispielsweise in Fig. 5 erkennbar ist, stehen die Kabel 6 an einer vorderen Stirnseite 8 der Kabelhalter 5 nach vorn ab. Wie aus den Fig. 5 und 6 erkennbar ist, kann es sich beim Kabel 6 um ein Lichtleitkabel handeln, dessen vom Kabelhalter 5 positioniertes Kabelende abisoliert ist, so dass eine Lichtleitfaser 9 frei endet.

Die Stecker 5 sind zweckmäßig an eine hier nicht gezeigte Vorrichtung zur Bearbeitung der Kabel 6 adaptiert. Beispielsweise wird ein noch vollständig isoliertes Lichtleitkabel 6 in den Kabelhalter 5 eingelegt und darin fixiert, um es in der genannten Vorrichtung zu bearbeiten. Der Kabelhalter 5 kann dann in diese Vorrichtung eingesetzt und darin festgelegt werden, um das Kabel 6 für die nachfolgende Bearbeitung zu positionieren. Beispielsweise kann in der Vorrichtung das Lichtleitkabel abisoliert werden und anschließend kann die abisolierte Lichtleitfaser auf eine bestimmte Länge geschnitten werden. Nach dieser Bearbeitung besitzt das geschnittene freie Ende der Lichtleitfaser 9 eine bestimmte Relativlage bezüglich des Kabelhalters 5, die dazu geeignet ist, das Lichtleitkabel 6 mit dem Kabelhalter 5 an das Mess- und/oder Prüfgerät 7 anzuschließen.

Die Aufnahmen 4 im Gehäuse 2 sind so ausgestaltet, dass die darin eingesteckten Kabelhalter 5 jeweils eine vorbestimmte Relativlage bezüglich des Gehäuses 2 aufweisen. Erreicht wird dies beispielsweise mit Hilfe einer hier nicht näher erläuterten Verrastung, die beispielsweise durch einen beim Einsteckvorgang überwindbaren Einsteckwiderstand realisierbar ist. Die Aufnahmen 4 sind komplementär zu den Kabelhaltern 5 ausgestaltet. Die hier verwendeten Kabelhalter 5 bauen relativ flach, das bedeutet, dass eine quer zu ihrer Steckrichtung gemessene Höhe 10 (vgl. Fig. 1), insbesondere zwei bis vier mal, kleiner ist als eine quer zur Steckrichtung gemessene Breite 11. Die komplementären Aufnahmen 4 sind dementsprechend ebenfalls "flach" ausgebildet und besitzen quer zur Einsteckrichtung eine größere Breite 12 (vgl. Fig. 2) als Höhe 13.

Um im Träger 1 eine kompakte Stapelung der eingesteckten Kabelhalter 5 erzielen zu können, sind bei den hier gezeigten Ausführungsformen sämtliche Aufnahmen 4 in einer parallel zur Höhe 13 der Aufnahmen 4 verlaufenden Richtung übereinander angeordnet. Zusätzlich kann ein in Fig. 3 eingezeichneter Abstand 14 zwischen benachbarten Aufnahmen 4 relativ klein sein, insbesondere gleich groß wie oder kleiner als die Höhe 13 einer Aufnahme 4. Diese Maßnahme führt zu einer besonders dichten Anordnung der eingesteckten Kabelhalter 5.

Bei den Ausführungsformen der Fig. 1 bis 4 ist jede Aufnahme 4 in einem separaten Aufnahmeschacht 15 ausgebildet. Im Unterschied dazu enthält das Gehäuse 2 bei der Ausführungsform der Fig. 5 und 6 für alle Aufnahmen 4 einen gemeinsamen Aufnahmeschacht 16, so dass das Gehäuse 2 dort eine Art Rahmen für den Schacht 16 bildet.

Wie z.B. aus den Fig. 5 und 6 deutlich wird, sind die in den Träger 2 eingesteckten Kabelhalter 5 am Träger 1 so positioniert, dass die freien Kabelenden der in den Kabelhaltern 5 gehalterten Kabel 6 das Gehäuse 2 in der Einsteckrichtung durchdringen. Während bei den einfachen Ausführungen der Fig. 5 und 6 auch die Kabelhalter 5 das Gehäuse 2 in Einsteckrichtung durchdringen, besitzt das Gehäuse 2 der in den Fig. 1 bis 4 gezeigten Ausführungsform an einer von der Kabelhalterseite 3 abgewandten Gehäuseseite 17 einen Abschnitt 18, der im Inneren der Aufnahmen 4 für jeden Kabelhalter 5 einen Anschlag bildet, an dem der jeweilige Kabelhalter 5 in Einsteckrichtung zur Anlage kommt, sobald er die für ihn vorgesehene Relativlage im Träger 1 einnimmt.

Die Aufnahmen 4 können entsprechend der hier gezeigten Ausführungsformen mit nutförmigen Führungsschienen 19 ausgestattet sein, vgl. insbesondere Fig. 3. Diese Führungsschienen 19 erleichtern den Einsteckvorgang für die Kabelhalter 5 und bilden eine Zwangsführung, die das Auffinden der vorbestimmten Relativlage für die Kabelhalter 5 gewährleistet. Die Kabelhalter 5 sind mit entsprechenden, seitlich abstehenden Führungsgliedern 20 ausgestattet, vgl. z.B. Fig. 2, die beim Einstecken mit den zugehörigen Führungsschienen 19 in Eingriff stehen.

Bei den hier gezeigten Ausführungsformen ist der Träger 1 jeweils als Mehrfachstecker ausgebildet, derart, dass er mit seiner Geräteseite 17 vorangehend in eine komplementär ausgestaltete Mehrfachbuchse 21 einsteckbar ist. Diese Buchse 21 ist am Mess- und Prüfgerät 7 ausgebildet und enthält gemäß Fig. 1 Kontakte 22, über die eine optische und/oder elektrische Signalübertragung mit den freien Enden der Kabel 6 herstellbar ist, sobald der Träger 1 ordnungsgemäß an die Mehrfachbuchse 21 angeschlossen ist.

Zur Sicherung des Trägers 1 an der Mehrfachbuchse 21 kann eine hier nicht gezeigte Sicherungseinrichtung vorgesehen sein, mit welcher der eingesteckte oder aufgesteckte Träger 1 gegen ein selbsttätiges Lösen von der Mehrfachbuchse 21 gesichert werden kann. Eine derartige Sicherungseinrichtung kann beispielsweise nach Art eines linearen Bajonettverschlusses arbeiten, bei dem durch Linearverstellung eines Schiebers ein Formschluss zwischen Träger 1 und Mehrfachbuchse 21 bzw. Gerät 7 hergestellt wird.

Entsprechend den Fig. 2 bis 5 kann außerdem eine Schutzkappe 23 vorgesehen sein, die dann an der Geräteseite 17 auf das Gehäuse 2 aufsteckbar ist, wenn der Träger 1 nicht an das Gerät 7 angeschlossen ist. Die Schutzkappe 23 ist dabei so dimensioniert, dass sie die freien Enden der Kabel 6 der in den Träger 1 eingesteckten Kabelhalter 5 berührungslos abdeckt und dadurch das Gehäuse 2 an der Geräteseite 17 verschließt. Die freien Kabelenden sind dann im Inneren der Schutzkappe 23 positioniert und nach außen gegen Staub, Schmutz und Berührung geschützt.

Zum Aufstecken der Schutzkappe 23 ist bei der Ausführungsform der Fig. 1 bis 4 der Abschnitt 18 mit einer Stufe 24 versehen, vgl. die Fig. 1 und 2, die den Steckvorgang definiert und außerdem so dimensioniert ist, dass sich die aufgesteckte Schutzkappe 23 formschön in die Außenkontur des Gehäuses 2 integriert. Im Unterschied dazu ist bei der Ausführungsform gemäß Fig. 5 die Schutzkappe 23 so dimensioniert, dass der gesamte Rahmen 2 darin einsteckbar ist. Im Inneren der Schutzkappe 23 sind dann, hier nicht erkennbare Anschläge realisiert, welche die Einstecktiefe für das Gehäuse 2 begrenzen, um einen Kontakt der freien Kabelenden mit der Innenseite der Schutzkappe 23 zu verhindern.

Entsprechend Fig. 6 ist das Mess- und/oder Prüfgerät 7 im Bereich seiner Mehrfachbuchse 21 mit einer Zentriereinrichtung 25 ausgestattet. Zwar sind die freien Kabelenden in den Kabelhaltern 5 und im Träger 1 relativ hochwertig positioniert, dennoch können Restkrümmungen innerhalb der Kabel 6 Abweichungen der freien Kabelenden von einer vorgesehenen Idealposition verursachen. Mit Hilfe der Zentriereinrichtung 25 sind nun die freien Kabelenden beim Steckvorgang oder nach dem Anbringen des Träges 1 an der Mehrfachbuchse 21 auf die Kontakte 22 ausrichtbar. Die hier lediglich symbolisch angedeutete Zentriereinrichtung 25 kann beispielsweise zwei Blendenschieber 26 aufweisen, die für jedes Kabelende eine V-förmige Führung 27 aufweisen und mittels eines Antriebs 28 entsprechend den Pfeilen 29 aufeinander zu verstellbar sind. Bei der Betätigung der Zentriereinrichtung 25 erstrecken sich die Kabelenden durch die zugeordneten V-Führungen 27 und werden durch die Verstellung der Blendenschieber 26 in der gewünschten Weise zentriert. Es ist klar, dass die Zentriereinrichtung 25 auch einen anderen geeigneten Aufbau aufweisen kann. Obwohl es zweckmäßig ist, die Zentriereinrichtung 25 am Mess- und/oder Prüfgerät 7 auszubilden, kann es bei einer anderen Ausführungsform auch möglich sein, diese oder eine andere Zentriereinrichtung 25 am Träger 1 auszubilden.

Bei den hier gezeigten Ausführungsformen verlaufen die Einsteckrichtungen aller Kabelhalter 5 parallel zueinander. Des weiteren sind hier alle Aufnahmen 4 identisch ausgebildet. In Fig. 5 ist beispielhaft eine Gerade 30 eingetragen, die senkrecht zur Einsteckrichtung der Kabelhalter 5 verläuft und auf der sämtliche freien Kabelenden der Kabel 6 zumindest näherungsweise oder im Idealfall liegen, die mit ihren Kabelhaltern 5 ordnungsgemäß in den Träger 1 eingesteckt sind. Sofern der Träger 1 mehrere Reihen von Aufnahmen 4 besitzt, befinden sich dann die freien Kabelenden in etwa in einer Ebene, die senkrecht zu den Einsteckrichtungen der Kabelhalter 5 verläuft.

Der erfindungsgemäße Träger 1 dient als Halterung oder Positionierung mehrerer Kabelhalter 5, bevor oder nachdem diese zum Anschluss an das Gerät 7 benötigt werden, wodurch sich die Handhabung mehrerer Kabelhalter 5 vereinfacht. Sofern der Träger 1 als Mehrfachstecker ausgestaltet ist, kann das gleichzeitige Anschließen mehrerer Kabelhalter 5 an das Gerät 7 erheblich vereinfacht werden. Des weiteren wird der Platzbedarf am Gerät 7 für den Anschluss mehrerer Kabelhalter 5 erheblich reduziert, da für die Zugänglichkeit einer Mehrfachbuchse 21 erheblich weniger Freiraum erforderlich ist als für die Zugänglichkeit mehrerer einzelner Buchsen.

Es ist klar, das am Mess- und/oder Prüfgerät 7 neben der gezeigten Mehrfachbuchse 21 wenigstens eine weitere Mehrfachbuchse 21 angeordnet werden kann, so dass mit Hilfe der erfindungsgemäßen Träger 1 eine Vielzahl von Kabelhaltern 5 relativ rasch an das Gerät 7 anschließbar sind.

## Patentansprüche

1. Träger für mehrere Kabelhalter (5) zum Haltern und/oder Führen von Kabeln (6), insbesondere von Lichtleitkabeln, mit einem Gehäuse (2), das auf einer Kabelhalterseite (3) mehrere Aufnahmen (4) enthält, in die jeweils einer der Kabelhalter (5) einsteckbar ist, wobei ein vom Kabelhalter (5) gehaltertes und in Einsteckrichtung von diesem abstehendes Kabel (6) bei in die jeweilige Aufnahme (4) eingestecktem Kabelhalter (5) das Gehäuse (2) an einer von der Kabelhalterseite (3) abgewandten Geräteseite (17) durchdringt, wobei die Einsteckrichtungen mehrerer oder aller Aufnahmen (4) parallel zueinander verlaufen.

2. Träger nach Anspruch 1,
**dadurch gekennzeichnet,**
**dass** der Träger (1) als Mehrfachstecker ausgebildet ist und mit seiner Geräteseite (17) vorangehend in eine komplementäre Mehrfachbuchse (21) einsteckbar ist, die an einem Meß- und/oder Prüfgerät (7) ausgebildet ist und für die freien Enden der Kabel (6) der in den Träger (1) eingesteckten Kabelhalter (5) Kontakte (22) für eine optische und/oder elektrische Signalübertragung aufweist.

3. Träger nach Anspruch 2,
**dadurch gekennzeichnet,**
**dass** das Gerät (7) und/oder der Träger (1) eine Zentriereinrichtung (25) aufweist, mit der die freien Enden der Kabel (6) auf die Kontakte (22) der Mehrfachbuchse (21) ausrichtbar sind.

4. Träger nach Anspruch 2 oder 3,
**dadurch gekennzeichnet,**
**dass** eine Sicherungseinrichtung vorgesehen ist, die den in die Mehrfachbuchse (21) eingesteckten Träger (1) am Gerät (7) sichert.

5. Träger nach Anspruch 4,
**dadurch gekennzeichnet,**
**dass** die Sicherungseinrichtung nach Art eines linearen Bajonettverschlusses ausgebildet ist.

6. Träger nach einem der Ansprüche 1 bis 5
**dadurch gekennzeichnet,**
**dass** eine Schutzkappe (23) vorgesehen ist, die an der Geräteseite (17) auf das Gehäuse (2) aufsteckbar ist und dabei die freien Enden der Kabel (6) der in den Träger (1) eingesteckten Kabelhalter (5) in sich aufnimmt und nach außen schützt.

7. Träger nach einem der Ansprüche 1 bis 6,
**dadurch gekennzeichnet,**
**dass** mehrere oder alle Aufnahmen (4) identisch ausgebildet sind.

8. Träger nach einem der Ansprüche 1 bis 7,
**dadurch gekennzeichnet,**
**dass** wenigstens eine der Aufnahmen (4) Führungsschienen (19) enthält, die parallel zur Einsteckrichtung verlaufen, wobei am passenden Kabelhalter (5) komplementäre Führungsglieder (20) ausgebildet sind, die beim Einstecken des Kabelhalters (5) in die Aufnahme (4) mit den Führungsschienen (19) zusammenwirken.

9. Träger nach einem der Ansprüche 1 bis 8,
**dadurch gekennzeichnet,**
**dass** das Gehäuse (2) an seiner Kabelhalterseite (3) einen gemeinsamen Aufnahmeschacht (16) aufweist, der mehrere oder alle Aufnahmen (4) enthält.

10. Träger nach einem der Ansprüche 1 bis 9,
**dadurch gekennzeichnet,**
**dass** das Gehäuse (2) an seiner Kabelhalterseite (3) mehrere Aufnahmeschächte (15) aufweist, die jeweils nur eine der Aufnahmen (4) enthalten.

11. Träger nach einem der Ansprüche 1 bis 10,
**dadurch gekennzeichnet,**
**dass** jeder Aufnahme (4) und dem darin eingesteckten Kabelhalter (5) eine Verrastung zugeordnet ist, bei welcher der Kabelhalter (5) einrastet, wenn er eine vorbestimmte Relativlage in der Aufnahme (4) einnimmt.

12. Träger nach einem der Ansprüche 1 bis 11,
**dadurch gekennzeichnet,**
**dass** mehrere oder alle Aufnahmen (4) quer zur Einsteckrichtung eine größere Breite (12) als Höhe (13) aufweisen, wobei diese Aufnahmen (4) in Höhenrichtung übereinander oder nebeneinander angeordnet sind.

13. Träger nach einem der Ansprüche 1 bis 12,
**dadurch gekennzeichnet,**
**dass** mehrere oder alle Aufnahmen (4) so ausgebildet sind, dass bei darin eingestecktem Kabelhalter (5) die freien Enden der Kabel (6) auf einer senkrecht zur Einsteckrichtung verlaufenden Geraden (30) oder in einer senkrecht zur Einsteckrichtung verlaufenden Ebene liegen.

14. Mess- und/oder Prüfgerät zum Messen und/oder Prüfen von elektrischen und/oder optischen Komponenten oder Bauteilen mit mindestens einer Mehrfachbuchse (21), in die ein komplementärer Mehrfachstecker (1), insbesondere zumindest mit den Merkmalen des Anspruchs 2, einsteckbar ist, von dem an einer dem Gerät (7) zugewandten Geräteseite (17) mehrere freie Enden von Kabeln (6) abstehen, wobei jede Mehrfachbuchse (21) für die freien Kabelenden jeweils einen Kontakt (22) für eine optische und/oder elektrische Signalübertragung aufweist.

15. Mehrfachbuchse, insbesondere an einem oder für ein Mess- und/oder Prüfgerät (7) zum Messen und/oder Prüfen von elektrischen und/oder optischen Komponenten oder Bauteilen, wobei in die Mehrfachbuchse (21) ein komplementärer Mehrfachstecker (1), insbesondere zumindest mit den Merkmalen des Anspruchs 2, einsteckbar ist, von dem an einer der Mehrfachbuchsen (21) zugewandten Seite (17) mehrere freie Enden von Kabeln (6) abstehen, wobei die Mehrfachbuchse (21) für die freien Kabelenden jeweils einen Kontakt (22) für eine optische und/oder elektrische Signalübertragung aufweist.

## Geänderte Patentansprüche

### Geänderte Patentansprüche gemäss Regel 86(2) EPÜ.

1. Mehrfachstecker für mehrere Kabelhalter (5) zum Haltern und/oder Führen von Lichtleitkabeln (6), mit einem Gehäuse (2), das auf einer Kabelhalterseite (3) mehrere Aufnahmen (4) enthält, in die jeweils einer der Kabelhalter (5) einsteckbar ist, wobei ein vom Kabelhalter (5) gehaltertes und in Einsteckrichtung von diesem abstehendes Kabel (6) bei in die jeweilige Aufnahme (4) eingestecktem Kabelhalter (5) das Gehäuse (2) an einer von der Kabelhalterseite (3) abgewandten Geräteseite (17) durchdringt, wobei die Einsteckrichtungen mehrerer oder aller Aufnahmen (4) parallel zueinander verlaufen,
worin der Mehrfachstecker mit seiner Geräteseite (17) vorangehend in eine komplementäre Mehrfachbuchse (21) einsteckbar ist, die an einem Gerät (7), vorzugsweise einem Meß- und/oder Prüfgerät (7), ausgebildet ist und für die freien Enden der Kabel (6) der in den Träger (1) eingesteckten Kabelhalter (5) Kontakte (22) für eine optische Signalübertragung aufweist, und
das Gerät (7) und/oder der Träger (1) eine Zentriereinrichtung (25) aufweist, mit der die freien Enden der Kabel (6) auf die Kontakte (22) der Mehrfachbuchse (21) ausrichtbar sind.

2. Mehrfachstecker nach Anspruch 1,
**dadurch gekennzeichnet,**
**dass** eine Sicherungseinrichtung vorgesehen ist, die den in die Mehrfachbuchse (21) eingesteckten Träger (1) am Gerät (7) sichert.

3. Mehrfachstecker nach Anspruch 1 oder 2,
**dadurch gekennzeichnet,**
**dass** die Sicherungseinrichtung nach Art eines linearen Bajonettverschlusses ausgebildet ist.

4. Mehrfachstecker nach einem der vorangegangenen Ansprüche,
**dadurch gekennzeichnet,**
**dass** eine Schutzkappe (23) vorgesehen ist, die an der Geräteseite (17) auf das Gehäuse (2) aufsteckbar ist und dabei die freien Enden der Kabel (6) der in den Träger (1) eingesteckten Kabelhalter (5) in sich aufnimmt und nach außen schützt.

5. Mehrfachstecker nach einem der vorangegangenen Ansprüche,
**dadurch gekennzeichnet,**
**dass** mehrere oder alle Aufnahmen (4) identisch ausgebildet sind.

6. Mehrfachstecker nach einem der vorangegangenen Ansprüche,
**dadurch gekennzeichnet,**
**dass** wenigstens eine der Aufnahmen (4) Führungsschienen (19) enthält, die parallel zur Einsteckrichtung verlaufen, wobei am passenden Kabelhalter (5) komplementäre Führungsglieder (20) ausgebildet sind, die beim Einstecken des Kabelhalters (5) in die Aufnahme (4) mit den Führungsschienen (19) zusammenwirken.

7. Mehrfachstecker nach einem der vorangegangenen Ansprüche,
**dadurch gekennzeichnet,**
**dass** das Gehäuse (2) an seiner Kabelhalterseite (3) einen gemeinsamen Aufnahmeschacht (16) aufweist, der mehrere oder alle Aufnahmen (4) enthält.

8. Mehrfachstecker nach einem der vorangegangenen Ansprüche,
**dadurch gekennzeichnet,**
**dass** das Gehäuse (2) an seiner Kabelhalterseite (3) mehrere Aufnahmeschächte (15) aufweist, die jeweils nur eine der Aufnahmen (4) enthalten.

9. Mehrfachstecker nach einem der vorangegangenen Ansprüche,
**dadurch gekennzeichnet,**
**dass** jeder Aufnahme (4) und dem darin eingesteckten Kabelhalter (5) eine Verrastung zugeordnet ist, bei welcher der Kabelhalter (5) einrastet, wenn er eine vorbestimmte Relativlage in der Aufnahme (4) einnimmt.

10. Mehrfachstecker nach einem der vorangegangenen Ansprüche,
**dadurch gekennzeichnet,**
**dass** mehrere oder alle Aufnahmen (4) quer zur Einsteckrichtung eine größere Breite (12) als Höhe (13) aufweisen, wobei diese Aufnahmen (4) in Höhenrichtung übereinander oder nebeneinander angeordnet sind.

11. Mehrfachstecker nach einem der vorangegangenen Ansprüche,
**dadurch gekennzeichnet,**
**dass** mehrere oder alle Aufnahmen (4) so ausgebildet sind, dass bei darin eingestecktem Kabelhalter (5) die freien Enden der Kabel (6) auf einer senkrecht zur Einsteckrichtung verlaufenden Geraden (30) oder in einer senkrecht zur Einsteckrichtung verlaufenden Ebene liegen.

12. Mess- und/oder Prüfgerät zum Messen und/oder Prüfen von optischen Komponenten oder Bauteilen mit mindestens einer Mehrfachbuchse (21), in die ein komplementärer Mehrfachstecker (1) nach einem der Ansprüche 1-11 einsteckbar ist, von dem an einer dem Gerät (7) zugewandten Geräteseite (17) mehrere freie Enden von Kabeln (6) abstehen, wobei jede Mehrfachbuchse (21) für die freien Kabelenden jeweils einen Kontakt (22) für eine optische Signalübertragung aufweist.

13. Mehrfachbuchse, insbesondere an einem oder für ein Mess- und/oder Prüfgerät (7) zum Messen und/oder Prüfen von optischen Komponenten oder Bauteilen, wobei in die Mehrfachbuchse (21) ein komplementärer Mehrfachstecker (1) nach einem der Ansprüche 1-11einsteckbar ist, von dem an einer der Mehrfachbuchsen (21) zugewandten Seite (17) mehrere freie Enden von Kabeln (6) abstehen, wobei die Mehrfachbuchse (21) für die freien Kabelenden jeweils einen Kontakt (22) für eine optische Signalübertragung aufweist.
